# EUROPEAN PATENT SPECIFICATION

(11) **EP 2 253 527 B1**
(45) Date of publication and mention of the grant of the patent: **28.11.2012**
(21) Application number: 10162927.7
(22) Date of filing: 17.05.2010
(51) Int. Cl.: B62D 6/04

(54) **Steering servo system**
Servolenksystem
Système de direction servo

(30) Priority: 20.05.2009 SE 0950361
(43) Date of publication of application: 24.11.2010
(73) Proprietor: Scania CV AB (publ), 151 87 Södertälje (SE)
(72) Inventor: Juhlin, Magnus, SE-155 31, Nykvarn (SE)

(56) References cited:
- JP-A- 60 163 767
- US-A1- 2005 273 240

## Description

### Field of the invention

The present invention relates to a steering servo system for a vehicle, and a method for a steering servo system, according to the preambles of the independent claims. Although the invention is exemplified by application to a bus, it is equally applicable to a truck or a passenger car or any other vehicle equipped with a steering servo system.

### Background to the invention

Buses and trucks, and also most passenger cars, are equipped today with a steering servo system to facilitate the steering of the vehicle. In simple terms, the way the servo system works is that a servo motor facilitates the steering of the vehicle on the basis of one or more input signals, e.g. steering wheel angle, steering wheel torque and yaw rate.

The steering servo system helps inter alia to correct directional deviations which occur, for example, when the vehicle is subject to external disturbance, e.g. strong wind. Large vehicles, e.g. buses and trucks, are often sensitive to crosswind and there is risk of the driver losing control of the vehicle in strong crosswind.

On passenger cars, (e.g. VW and Audi) the steering system can withstand crosswind disturbance but cannot speed up correction by the driver.

Examples of a number of patents which all relate to steering servo systems for vehicles are cited below.

JP60163767 describes a steering servo system for a vehicle comprising a steering wheel angle sensor adapted to detecting current steering wheel angle and generating a steering wheel angle signal, this signal is conveyed to a servo control unit. A centre of gravity sensor is connected to a centre of gravity calculating unit which is adapted to calculating the vehicle's centre of gravity on the basis of measured values received from the centre of gravity sensors and conveying a centre of gravity signal representing the vehicle's centre of gravity to said servo control unit.

US-4,540,059 relates to a steering system intended to compensate for directional deviations of a vehicle caused by, for example, crosswind. Inter alia, a yaw sensor may be provided so that unwanted deviation of the vehicle due to strong crosswind can be avoided without the driver having to compensate manually by turning the steering wheel.

GB-1,451,906 also refers to examples of a servo system which compensates for crosswind effects on a vehicle.

US-6,053,270 relates to steering wheel deflection correction systems for a vehicle, based inter alia on the vehicle's position on the road.

The general object of the present invention is to improve a vehicle's manoeuvrability, particularly in relation to external disturbance, e.g. wind action.

### Summary of the invention

The aforesaid object is achieved with the invention defined by the independent claims.

Preferred embodiments are defined by the dependent claims.

The invention is based on the inventor's observation that the sensitivity of, for example, buses to crosswind is because they are often rear-heavy with a consequently large distance between the point where the resulting wind load impinges and the centre of gravity. The result is a strong yaw moment which greatly affects the vehicle's directional stability. Moreover, the position of the centre of gravity on a bus varies greatly depending on how heavily laden it is, so the crosswind sensitivity may also vary. The variation in the position of the centre of gravity also affects steering sensation when driving in no crosswind.

As well as the already mentioned unfavourable weight distribution, the steering in today's buses has only one steering gear ratio (which may depend on steering wheel angle) and one servo characteristic (which depends on steering wheel torque).

A study has shown that changing the steering sensation (vehicle response as a function of steering wheel angle and steering wheel torque) and thereby minimising the corrective effort which the driver needs to apply greatly reduces directional deviation. This is achieved by change of steering gear ratio and servo assistance when crosswind disturbance is detected, and the magnitude of the change depends on current axle load distribution, i.e. the position of the centre of gravity. Steering sensation may thus be optimised for driving both with and without external disturbance, resulting in steering sensation which is appreciated by the driver when driving without disturbance, while at the same time improving safety when disturbance does occur.

An advantage of the present invention is that the directional stability of the bus in crosswind is improved by modifying only the steering. This makes it possible to manufacture lighter and/or larger vehicles with better directional stability which are also more energy efficient.

In brief, the invention is based on adapting the servo ratio and the servo assistance according to the vehicle's centre of gravity and at least one from among the parameters steering wheel angle, steering wheel torque and yaw rate.

Thus what distinguishes the present invention from the state of the art is that account is also taken of the position of the vehicle's centre of gravity. The idea is to adapt the steering sensation according to the axle load distribution by change of steering gear ratio and servo assistance even when there is no external disturbance, e.g. crosswind. When external disturbance occurs, the steering sensation changes according to the axle load distribution with the object of minimising the maximum steering effort required of the driver. The present invention is preferably intended to help the driver, rather than to automate the steering, thereby reducing the risk of the system making a wrong correction.

### Brief description of the drawings

Figure 1 is a schematic diagram of a steering servo system according to the present invention.
Figure 2 is a flowchart illustrating the method according to the present invention.

### Detailed description of preferred embodiments of the invention

The invention is described in detail below with reference to the attached drawings, using the following parameters and expressions:
Steering wheel angle - SWA, also referred to as δₕ.
Steering wheel torque - SWT, also referred to as Mₕ.
Yaw rate - YR.
Position of the vehicle's centre of gravity - COG.

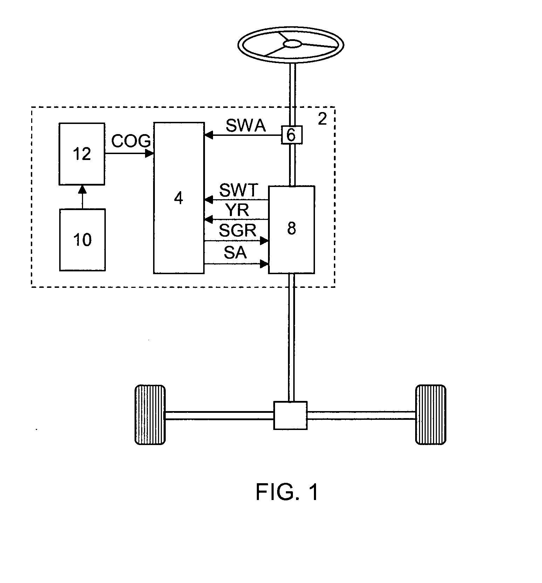

Figure 1 depicts schematically how a steering wheel, via a steering wheel stem, acts upon the steering of a vehicle's wheels. It depicts a physical steering wheel stem, but a specialist within the field will appreciate that there other solutions, e.g. electrical transmission of control signals to auxiliary motors adapted to performing the steering locally.

Figure 1 depicts a steering servo system 2 for a vehicle comprising at least one or more from among a yaw angle sensor 6 adapted to detecting current steering wheel angle and generating a steering wheel angle signal SWA in response to steering wheel angle detected, a steering torque sensor 8 adapted to detecting current steering wheel torque and generating a steering wheel torque signal SWT in response to torque detected, and a yaw rate sensor 8 adapted to detecting current yaw rate and generating a yaw rate signal YR in response to the yaw rate detected. These detected signals are adapted to being conveyed to a servo control unit 4. The steering wheel torque sensor and the yaw rate sensor are here referred to as a single sensor unit but may equally well take the form of two separate sensors.

The system further comprises one or more centre of gravity sensors 10 connected to a centre of gravity calculation unit 12 adapted to calculating the vehicle's centre of gravity on the basis of measured values received from the centre of gravity sensors, and to conveying at least a centre of gravity signal COG representing the vehicle's centre of gravity to said servo control unit 4. The servo control unit is adapted to calculating one or more control parameters for the steering servo system in response to said centre of gravity signal and at least one from among the other signals.

Control parameters for the steering servo system comprise the servo system's steering gear ratio SGR and servo assistance SA.

These control parameters are defined as follows:
Steering gear ratio SGR is defined as the transmission ratio used by the servo, i.e. it denotes the relationship between steering wheel deflection and pivoting of the vehicle's steered wheels.

Servo assistance SA is defined as the force or torque which the servo exerts on the steering.

Calculating the control parameters involves using a set of servo control rules which may in general terms be expressed as:
SGR = f(SWA, SWT, YR, COG)
   i.e. the steering gear ratio is a function (f) of one or more from among the parameters steering wheel angle, steering wheel torque, yaw rate and the position of the centre of gravity. Further parameters may be involved in the function, e.g. pressure signals from pressure sensors placed on the vehicle's respective sides to detect wind action on the vehicle.
SA = g(SWA, SWT, YR, COG)
   i.e. the servo assistance is a function (g) of one or more from among the parameters steering wheel angle, steering wheel torque, yaw rate and the position of the centre of gravity. Further parameters may be involved in the function, e.g. pressure signals from pressure sensors.

The functions f and g used for calculating the steering gear ratio and the servo assistance are based on general relationships without taking into account the effects of the position of the centre of gravity. A specialist within the field will be familiar with a number of ways of calculating SGR and SA which will not be described in detail here. An example which may be cited is the aforesaid US-6,053,270 which describes in detail the calculation of, for example, servo assistance based on steering wheel deflection and steering wheel torque. Other examples are referred to in the aforesaid GB-1,451,906.

Reducing the steering effort required of the driver to compensate for crosswind disturbance reduces the directional deviation due to crosswind disturbance and is achieved by increasing the servo assistance and reducing the steering gear ratio. This may generate a steering sensation which is not appreciated by the driver. Taking current position of centre of gravity/crosswind sensitivity into account makes it possible for adaptation of servo assistance and steering gear ratio respectively to be applied individually in order to maintain good steering sensation while at the same time the directional deviation is reduced by reduction of steering effort required.

The effect of the position of the centre of gravity is due to the distance between the vehicle's centre of gravity and the steered wheels; the greater the distance, the greater the effect on SGR and SA.

In crosswind, it is the distance between the point where the resulting wind load impinges on the vehicle and the position of the centre of gravity that affects SGR and SA. The longer this distance, the greater the effect of the control parameters.

Where the steering servo system is implemented in, for example, a bus, the result with the bus fully refuelled but empty, i.e. with no passengers aboard, is an initial value for the position of the centre of gravity. Thereafter the position of the centre of gravity changes as passengers and luggage come on board. The same reasoning applies when loading a truck.

According to an embodiment, the centre of gravity sensor takes the form of one or more axle load sensors which detect the load on the vehicle's axles and which may be situated close to the vehicle's suspension. If for example air suspension is used, the pressure in the air bellows may be used to provide a measure of axle load, in which case pressure sensors are preferably fitted close to the bellows but possibly also at a distance from them, and the pressure may be measured via a pipe or hose connected to the bellows.

Another embodiment uses instead wire strain gauges fitted close to the suspension and providing via their output signal a measure of axle load.

The position of centre of gravity signal contains information about the position of the centre of gravity in the vehicle's longitudinal direction relative to a longitudinal symmetry line of the vehicle, but preferably also information about the position of the centre of gravity sideways, and also vertically, relative to the vehicle's longitudinal symmetry axis.

The centre of gravity signal preferably further contains information about changes in the position of the centre of gravity in the vehicle.

The steering wheel angle sensor is preferably an optical sensor, but resistive or inductive sensors may also be used.

The steering wheel torque sensor measures the torque exerted by the vehicle's steering wheel, which may be example be measured by the inductive or magnetic sensors.

The yaw rate sensor takes the form in a preferred embodiment of a gyro-based sensor which detects the vehicle's deviation relative to a reference direction.

The servo control unit 4 itself comprises a calculation unit, a memory and input and output units for receiving and delivering signals. The servo control unit may for example take the form of a PC or a dedicated device specially adapted for the purpose.

The present invention comprises also a method for a steering servo system in a vehicle.

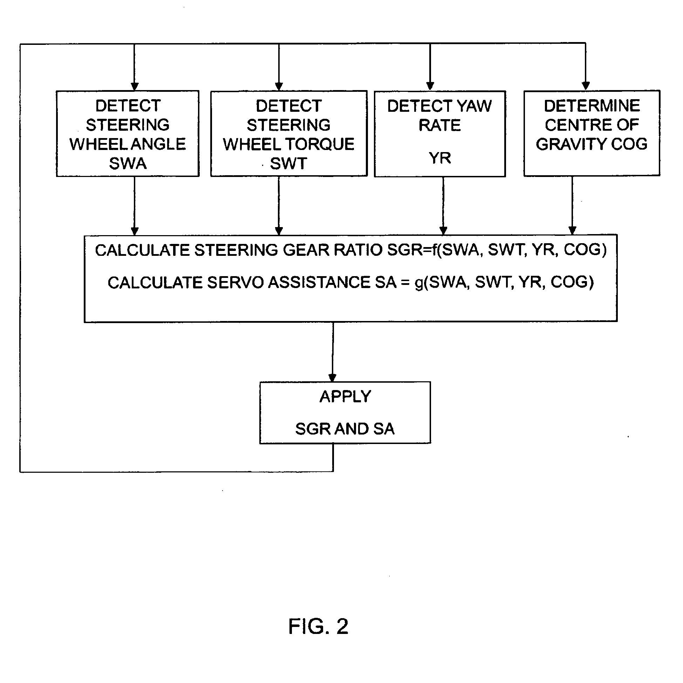

The method is described below with reference to Figure 2.

The method comprises at least one of the following steps:
- detecting current steering wheel angle and generating a steering wheel angle signal in response thereto and conveying the signal to a servo control unit;
- detecting current steering wheel torque and generating a steering wheel torque signal in response thereto and conveying the signal to said servo control unit, and
- detecting current yaw rate and generating a yaw rate signal in response thereto and conveying the signal to said servo control unit.

The method further comprises:
- calculating the vehicle's centre of gravity and conveying at least a centre of gravity signal representing the vehicle's centre of gravity to said servo control unit. The servo control unit is adapted to calculating one or more control parameters for the steering servo system in response to said centre of gravity signal and at least one from among the other signals.

The centre of gravity signal contains information about changes in the position of the centre of gravity in the vehicle and, in particular, information about changes in the position of the centre of gravity in the vehicle in the longitudinal direction and/or sideways relative to a longitudinal symmetry line of the vehicle. The centre of gravity signal preferably also comprises information about the position of the centre of gravity in the vertical direction.

The steering servo system thereafter calculates one or more control parameters, the steering wheel ratio (SGR) and servo assistance (SA) by applying a set of servo control rules as discussed above.

The invention comprises also a computer programme adapted to performing the method steps described above. The computer programme is for example stored on a memory in the servo control unit.

The present invention is not limited to the preferred embodiments described above. Various alternatives, modifications and equivalents may be used. The above embodiments are therefore not to be regarded as limiting the scope of protection of the invention defined by the attached claims.

## Claims

1. A steering servo system (2) for a vehicle comprising at least one or more from among a steering wheel angle sensor (6) adapted to detecting current steering wheel angle and generating a steering wheel angle signal (SWA) in response thereto, a steering wheel torque sensor (8) adapted to detecting current steering wheel torque and generating a steering wheel torque signal (SWT) in response thereto, and a yaw rate sensor (8) adapted to detecting current yaw rate and generating a yaw rate signal (YR) in response thereto, said signals being adapted to being conveyed to a servo control unit (4),
the system further comprises one or more centre of gravity sensors (10) connected to a centre of gravity calculation unit (12) which is adapted to calculating the vehicle's centre of gravity on the basis of measured values received from the centre of gravity sensors and to conveying at least a centre of gravity signal (COG) representing the vehicle's centre of gravity to said servo control unit, **characterised in that** the servo control unit is adapted to calculating steering gear ratio (SGR) and servo assistance (SA) for the servo steering system in response to said centre of gravity signal and at least one from among the other signals.

2. A steering servo system according to claim 1, in which the centre of gravity sensor (10) takes the form of one or more axle load sensors.

3. A steering servo system according to claim 1, in which the centre of gravity signal (COG) contains information about changes in the position of the centre of gravity in the vehicle.

4. A steering servo system according to claim 3, in which the centre of gravity signal (COG) contains information about changes in the position of the centre of gravity in the vehicle in the longitudinal direction relative to a longitudinal symmetry line of the vehicle.

5. A steering servo system according to any one of the foregoing claims, in which the centre of gravity signal (COG) contains information about changes in the position of the centre of gravity in the vehicle sideways relative to a longitudinal symmetry line of the vehicle.

6. A steering servo system according to claim 1, in which said centre of gravity sensors are situated close to the vehicle's suspension.

7. A steering servo system according to claim 1, in which said servo control unit calculates said one or more control parameters by applying a set of servo control rules.

8. A method for a steering servo system (2) in a vehicle, which method comprises at least one of the steps of
- detecting current steering wheel angle and generating a steering wheel angle signal (SWA) in response thereto and conveying the signal to a servo control unit (4),
- detecting current steering wheel torque and generating a steering wheel torque signal (SWT) in response thereto and conveying the signal to said servo control unit (4), and
- detecting current yaw rate and generating a yaw rate signal (YR) in response thereto and conveying the signal to said servo control unit (4),
the method further comprises
- calculating the vehicle's centre of gravity and conveying at least a centre of gravity signal (COG) representing the vehicle's centre of gravity to said servo control unit (4), **ch aracterised** in that the servo control unit is adapted to calculating steering gear ratio (SGR) and servo assistance (SA) for the steering servo system in response to said centre of gravity signal and at least one from among the other signals.

9. A method according to claim 8, in which the centre of gravity signal contains information about changes in the position of the centre of gravity in the vehicle.

10. A method according to claim 9, in which the centre of gravity signal contains information about changes in the position of the centre of gravity in the vehicle in the longitudinal direction relative to a longitudinal symmetry line of the vehicle.

11. A method according to either of claims 9 and 10, in which the centre of gravity signal contains information about changes in the position of the centre of gravity in the vehicle sideways relative to a longitudinal symmetry line of the vehicle.

12. A method according to claim 8, in which said servo control unit calculates said one or more control parameters by applying a set of servo control rules.

13. A computer programme adapted to performing the method steps according to any one of claims 8-12.

## Patentansprüche

1. Servolenksystem (2) für ein Fahrzeug, das zumindest eines oder mehrere der folgenden Merkmale umfasst: einen Lenkradwinkelsensor (6), der dazu eingerichtet ist, den aktuellen Lenkradwinkel zu ermitteln und ein Lenkradwinkelsignal (SWA) in Reaktion darauf zu erzeugen, einen Lenkradmomentsensor (8), der dazu eingerichtet Ist, das aktuelle Lenkradmoment zu ermitteln und ein Lenkradmomentsignal (SWT) In Reaktion darauf zu erzeugen, und ein Gierratensensor (8), der dazu eingerichtet Ist, eine aktuelle Glerrate zu ermitteln und ein Glerratesignal (YR) In Reaktion darauf zu erzeugen, wobei diese Signale dazu eingerichtet sind, zu einer Servosteuereinhelt (4) übertragen zu werden, wobei das System weiterhin einen oder mehrere Schwerpunktsensoren (10) umfasst, die mit einer Schwerpunktberechnungseinheit (12) verbunden sind, welche dazu eingerichtet Ist, den Fahrzeugschwerpunkt auf Basis von Messwerken zu berechnen, die sie von den Schwerpunktsensoren erhält, und zumindest ein Schwerpunktsignal (COG), das den Fahrzeugschwerpunkt darstellt, an die Servosteuereinhelt zu übertragen, **dadurch gekennzeichnet,**
**dass** die Servosteuereinheit dazu eingerichtet ist, ein Lenkübersetzungsverhältnis (SGR) und eine Servounterstützung (SA) für das Servolenksystem In Reaktion auf das Schwerpunktslgnal und wenigstens eines der anderen Signale zu berechnen.

2. Servolenksystem nach Anspruch 1,
bei dem der Schwerpunktsensor (10) in Form eines oder mehrerer Achslastsensoren ausgeführt Ist.

3. Servolenksystem nach Anspruch 1,
bei dem das Schwerpunktsignal (COG) Informationen bezügllch Veränderungen der Position des Schwerpunkts Im Fahrzeug umfasst.

4. Servolenksystem nach Anspruch 3,
bei dem das Schwerpunktsignal (COG) Informationen über Veränderungen der Position des Schwerpunkts Im Fahrzeug In der Längsrichtung relativ zu einer Längssymmetriellnie des Fahrzeugs umfasst.

5. Servolenksystem nach einem der vorangegangen Ansprüche,
bei dem das Schwerpunktsignal (COG) Informationen über Veränderungen der Position des Schwerpunkts des Fahrzeugs seitwärts relativ zu einer Längssymmetriellnie des Fahrzeugs umfasst.

6. Servolenksystem nach Anspruch 1,
bei dem die Schwerpunktsensoren nahe der Aufhängung des Fahrzeugs positioniert sind.

7. Servolenksystem nach Anspruch 1,
bei dem die Servosteuereinheit einen oder mehrere der Steuerparameter unter Verwendung eines Satzes von Servosteuerungsregeln berechnet.

8. Verfahren für ein Servolenksystem (2) in einem Fahrzeug, wobei das Verfahren wenigstens einen der folgenden Schritte umfasst:
- Ermitteln des aktuellen Lenkradwinkels und Erzeugen eines Lenkradwinkelsignals (SWR) in Reaktion darauf und Übertragen des Signals zu einer Servosteuereinheit (4),
- Ermitteln eines Lenkradmoments und Erzeugen eines Lenkradmomentsignals (SWT) in Reaktion darauf und Übertragen des Signals zur Servosteuereinheit (4), und
- Ermitteln der aktuellen Gierrate und Erzeugen eines Gierratesignals In Reaktion darauf und Übertragen des Signals zur Servosteuereinhelt (4), wobei das Verfahren weiterhin umfasst
- Berechnen des Fahrzeugschwerpunkts und Übertragen zumindest eines Schwerpunktsignals (COG), das den Fahrzeugschwerpunkt angibt, zur Servosteuereinheit (4), **dadurch gekennzeichnet,**
**dass** die Servosteuerelnhelt dazu eingerichtet ist, ein Lenkübersetzungsverhältnis (SGR) und eine Servounterstützung (SA) für das Servosteuersystem In Reaktion auf das Schwerpunktsignal und wenigstens einem der anderen Signale zu berechnen.

9. Verfahren nach Anspruch 8,
bei dem das Schwerpunktslgnal Informationen bezüglich Veränderungen der Position des Schwerpunkts im Fahrzeug umfasst.

10. Verfahren nach Anspruch 9,
bei dem das Schwerpunktsignal (COG) Informationen über Veränderungen der Position des Schwerpunkts Im Fahrzeug In der Längsrichtung relativ zu einer Längssymmetrielinie des Fahrzeugs umfasst.

11. Verfahren nach einem der Ansprüche 9 oder 10,
wobei das Schwerpunktsignal (COG) Informationen über Veränderungen der Position des Schwerpunkts des Fahrzeugs seitwärts relativ zu einer Längssymmetriellnie des Fahrzeugs umfasst.

12. Verfahren nach Anspruch 8,
bei dem die Servosteuereinheit einen oder mehrere der Steuerparameter unter Verwendung eines Satzes von Servosteuerungsregeln berechnet.

13. Computerprogramm, das dazu eingerichtet ist, die Verfahrensschritte nach einem der Ansprüche 8 bis 12 auszuführen.

## Revendications

1. Système d'asservissement de direction (2) pour un véhicule, comprenant au moins l'un ou plusieurs parmi un capteur d'angle de volant de direction (6) adapté de façon à détecter un angle actuel de volant de direction et à générer un signal d'angle de volant de direction (SWA) en réponse à celui-ci, un capteur de couple de volant de direction (8) adapté de façon à détecter un couple actuel de volant de direction et à générer un signal de couple de volant de direction (SWT) en réponse à celui-ci, et un capteur de taux de lacet (8) adapté de façon à détecter un taux actuel de lacet et à générer un signal de taux de lacet (YR) en réponse à celui-ci, lesdits signaux étant adaptés de façon à être acheminés vers une unité de commande d'asservissement (4), le système comprenant de plus un ou plusieurs capteurs de centre de gravité (10) connectés à une unité de calcul de centre de gravité (12) qui est adaptée de façon à calculer le centre de gravité du véhicule en fonction de valeurs mesurées reçues à partir des capteurs de centre de gravité et à acheminer au moins un signal de centre de gravité (COG) représentant le centre de gravité du véhicule vers ladite unité de commande d'asservissement, **caractérisé en ce que** l'unité de commande d'asservissement est adaptée de façon à calculer un rapport d'engrenages de direction (SGR) et une assistance d'asservissement (SA) pour le système de direction asservie en réponse audit signal de centre de gravité et à au moins l'un parmi les autres signaux.

2. Système d'asservissement de direction selon la revendication 1, dans lequel le capteur de centre de gravité (10) prend la forme d'un ou de plusieurs capteurs de charge d'essieu.

3. Système d'asservissement de direction selon la revendication 1, dans lequel le signal de centre de gravité (COG) contient une information concernant des changements de la position du centre de gravité dans le véhicule.

4. Système d'asservissement de direction selon la revendication 3, dans lequel le signal de centre de gravité (COG) contient une information concernant des changements de la position du centre de gravité dans le véhicule dans la direction longitudinale par rapport à une ligne de symétrie longitudinale du véhicule.

5. Système d'asservissement de direction selon l'une quelconque des revendications précédentes, dans lequel le signal de centre de gravité (COG) contient une information concernant des changements de la position du centre de gravité dans le véhicule vers les côtés par rapport à une ligne de symétrie longitudinale du véhicule.

6. Système d'asservissement de direction selon la revendication 1, dans lequel lesdits capteurs de centre de gravité sont situés près de la suspension du véhicule.

7. Système d'asservissement de direction selon la revendication 1, dans lequel ladite unité de commande d'asservissement calcule lesdits paramètres de commande au nombre d'un ou de plusieurs par l'application d'un jeu de règles de commande d'asservissement.

8. Procédé pour un système d'asservissement de direction (2) dans un véhicule, ce procédé comprenant au moins l'une des étapes consistant à:
- détecter un angle actuel de volant de direction et générer un signal d'angle de volant de direction (SWA) en réponse à celui-ci et acheminer le signal vers une unité de commande d'asservissement (4),
- détecter un couple actuel de volant de direction et générer un signal de couple de volant de direction (SWT) en réponse à celui-ci et acheminer le signal vers ladite unité de commande d'asservissement (4), et
- détecter un taux actuel de lacet et générer un signal de taux de lacet (YR) en réponse à celui-ci et acheminer le signal vers ladite unité de commande d'asservissement (4),
le procédé comprenant de plus :
- le calcul du centre de gravité du véhicule et l'acheminement d'au moins un signal de centre de gravité (COG) représentant le centre de gravité du véhicule vers ladite unité de commande d'asservissement (4),
**caractérisé en ce que** l'unité de commande d'asservissement est adaptée de façon à calculer un rapport d'engrenages de direction (SGR) et une assistance d'asservissement (SA) pour le système d'asservissement de direction en réponse audit signal de centre de gravité et à au moins l'un parmi les autres signaux.

9. Procédé selon la revendication 8, dans lequel le signal de centre de gravité contient une information concernant des changements de la position du centre de gravité dans le véhicule.

10. Procédé selon la revendication 9, dans lequel le signal de centre de gravité contient une information concernant des changements de la position du centre de gravité dans le véhicule dans la direction longitudinale par rapport à une ligne de symétrie longitudinale du véhicule.

11. Procédé selon l'une ou l'autre des revendications 9 et 10, dans lequel le signal de centre de gravité contient une information concernant des changements de la position du centre de gravité dans le véhicule vers les côtés par rapport à une ligne de symétrie longitudinale du véhicule.

12. Procédé selon la revendication 8, dans lequel ladite unité de commande d'asservissement calcule lesdits paramètres de commande au nombre d'un ou de plusieurs par l'application d'un jeu de règles de commande d'asservissement.

13. Programme informatique adapté pour exécuter les étapes de procédé selon l'une quelconque des revendications 8 à 12.
